# EUROPÄISCHE PATENTANMELDUNG

(11) **EP 1 209 018 A2**
(43) Veröffentlichungstag der Anmeldung: **29.05.2002**
(21) Anmeldenummer: 01127570.8
(22) Anmeldetag: 19.11.2001
(51) Int. Cl.: B60K 15/03

(54) **Kraftstoffbehälter**

(30) Priorität: 27.11.2000 DE 10058839
(71) Anmelder: SIEMENS AKTIENGESELLSCHAFT, 80333 München (DE)
(72) Erfinder: Moser, Rainer, Dr., 65510 Idstein (DE); Sun, Bing, Dr., 44787 Bochum (DE)

(57) **Zusammenfassung**

Bei einem Kraftstoffbehälter (1) für ein Kraftfahrzeug weist ein eine Montageöffnung (3) verschließender Deckel (4) einen Metalleinsatz (11) auf. Der Metalleinsatz (11) hat eine auf einen die Montageöffnung (3) seitlich begrenzenden Rand (9) weisende Druckfläche (13). Hierdurch werden Setzungen des Materials, die auf Dauer zu Undichtigkeiten des Kraftstoffbehälters (1) führen, verhindert.

## Beschreibung

Die Erfindung betrifft einen Kraftstoffbehälter für ein Kraftfahrzeug mit einer Montageöffnung, mit einem die Montageöffnung verschließenden, gegen den Rand der Montageöffnung vorgespannten Deckel und mit einer zwischen dem Rand der Montageöffnung und dem Deckel angeordneten Dichtung.

Ein solcher Kraftstoffbehälter ist beispielsweise aus der EP 0 838 360 A1 bekannt. Der Kraftstoffbehälter ist wie der Deckel aus Kunststoff gefertigt. Der Deckel ist mittels eines Bajonettverschlusses gegen den Rand der Montageöffnung vorgespannt. Zur Übertragung der Vorspannkräfte von dem Bajonettverschluß auf den Deckel ist auf der dem Rand der Montageöffnung abgewandten Seite ein Schließring angeordnet. Eine gummielastische Dichtung ist im Querschnitt im wesentlichen L-förmig gestaltet und zwischen dem Deckel und der Montageöffnung eingespannt. In radia1er Richtung wird der Deckel mittels Dichtlippen abgedichtet. Der Deckel ist hierdurch zuverlässig an dem übrigen Bereich des Kraftstoffbehälters gehalten. Die Montage und die Demontage des Deckels gestaltet sich hierdurch besonders einfach.

Die Dichtung des bekannten Kraftstoffbehälter weist somit eine gewisse Dicke auf. Um die Verbindung permeationsdicht gestalten zu können, ist die Dichtung aus Viton gefertigt. Die Nachteile dieses Dichtungskonzeptes sind die hohen Materialkosten des Dichtungsmaterials und die bei tiefen Temperaturen geringe Elastizität. Dadurch kann es infolge der Dicke der Dichtung bei Schwingungen, Temperatur- oder Druckänderungen zu Undichtheiten oder Beschädigungen der Dichtung kommen.

Der Erfindung liegt das Problem zugrunde, einen Kraftstoffbehälter der eingangs genannten Art so weiterzubilden, daß er auch bei Schwingungen, wechselnden Drücken und Temperaturen eine dauerhafte Dichtheit gewährleistet.

Dieses Problem wird erfindungsgemäß dadurch gelöst, daß der Rand der Montageöffnung und der gegen den Rand der Montageöffnung vorgespannte Bereich des Deckels eine auf das gegenüberliegende Bauteil weisende Druckfläche mit einer höheren Festigkeit aufweisen und zwischen den Druckflächen eine dünne Schicht eines Dichtmaterials angeordnet ist.

Die Anordnung des Dichtmaterials als dünne Schicht auf der Druckfläche ermöglicht die Nutzung der Dichteigenschaften ohne das die Nachteile, die aus einer großen Schichtdicke herrühren, Einfluß auf das Dichtsystem haben. Insbesondere die durch Temperatur- und Druckänderungen hervorgerufenen Veränderungen des Kraftstoffbehälters, die bei dicken Schichten des Dichtmaterials zu veränderlichen Anpreßkräften führten, haben mit der erfindungsgemäßen Gestaltung der Dichtung keinen Einfluß auf das Dichtverhalten.

Durch diese Gestaltung verhindern die Druckflächen, daß das Material des Deckels oder des Randes der Montageöffnung fließen kann und somit die Anpreßkräfte auf Dauer vermindert werden. Daher werden Setzungen des Kraftstoffbehälters oder des Deckels in dem abzudichtenden Bereich besonders gering gehalten. Hierdurch wird ein Entweichen von Kraftstoffdämpfen aus dem Kraftstoffbehälter besonders gering gehalten. Durch die Gestaltung der auf dem Rand der Montageöffnung angeordneten Druckfläche mit einer hohen Festigkeit können nunmehr auch Kraftstoffbehälter aus Kunststoff im Bereich der Montageöffnungen zuverlässig abgedichtet werden. Bei Kraftstoffbehältern aus Stahlblech kann die Gestaltung der auf dem Rand der Montageöffnung angeordneten Druckfläche häufig entfallen. Die erfindungsgemäße Dichtung ist daher besonders für Kraftstoffbehälter aus Stahlblech geeignet.

Zur Erzeugung der hohen Festigkeit der Druckfläche könnte der Deckel beispielsweise vollständig aus Metall, Keramik oder einem Kunststoff mit einer vergleichbaren Festigkeit gefertigt werden. Der Deckel läßt sich jedoch besonders kostengünstig fertigen, wenn die Druckfläche auf einem Metalleinsatz angeordnet ist.

Die Dichtung könnte wie bei dem bekannten Kraftstoffbehälter vollständig aus einem gummielastischen Material gefertigt sein. Setzungen der Dichtung lassen sich jedoch gemäß einer anderen vorteilhaften Weiterbildung der Erfindung besonders gering halten, wenn die zwischen dem Deckel und dem Rand der Montageöffnung angeordnete Dichtung einen Träger, vorzugsweise einen metallischen Träger besitzt. In einer vorteilhaften Ausgestaltung ist der Träger vollständig mit dem gummielastischen Dichtmaterial überzogen. Hierdurch kann das gummielastische Material besonders dünn gestaltet sein.

Die Dichtung hat gemäß einer anderen vorteilhaften Weiterbildung der Erfindung eine besonders hohe Stabilität, wenn der Träger der Dichtung zumindest eine Sicke hat. Dadurch erzeugt die Dichtung hohe Vorspannkräfte gegen die Druckfläche des Deckels oder des Randes der Montageöffnung. Dies trägt zur weiteren Erhöhung der Dichtheit des erfindungsgemäßen Kraftstoffbehälters bei.

Zur weiteren Erhöhung der Vorspannkräfte der Sicke gegen die gegenüberliegende Druckfläche trägt es gemäß einer anderen vorteilhaften Weiterbildung der Erfindung bei, wenn in der Sicke ein O-Ring angeordnet ist.

Zur weiteren Erhöhung der Dichtheit des Kraftstoffbehälters trägt es bei, wenn die Druckfläche eine umlaufende Kerbe aufweist und wenn in der Kerbe das Dichtmaterial angeordnet ist. Hierdurch kann entweder die Dichtung von dem Dichtmaterial gebildet werden oder das Dichtmaterial bildet den in die Sicke der Dichtung vorgespannten O-Ring. Das Dichtmaterial hat hierdurch besonders geringe Abmessungen, so daß bei wechselnden oder niedrigen Temperaturen zu Undichtigkeiten führende Setzungen vermieden werden. Diese Gestaltung führt auch bei aus Stahlblech gefertigten Kraftstoffbehältern zu einer besonders dauerhaften Dichtheit. Als Dichtmaterial können die bei dem bekannten Kraftstoffbehälter verwendeten Kautschuksorten eingesetzt werden.

Die erfindungsgemäße Dichtung erlaubt Schichtdicken des Dichtungsmaterials von 1 µm bis 2mm, vorzugsweise von 5 µm bis 500 µm.

Der Träger könnte beispielsweise aus einem weichen, häufig zur Abdichtung verwendeten Metall, wie beispielsweise Kupfer, gefertigt sein.

Der Metalleinsatz für die Druckflächen könnte beispielsweise ebenso aus Kupfer gefertigt sein. Der Metalleinsatz hat jedoch gemäß einer anderen vorteilhaften Weiterbildung der Erfindung eine besonders hohe Stabilität, wenn er aus Stahl gefertigt ist. Da durch die hohe Stabilität des Metalleinsatzes die Setzungen der Verbindung des Dekkels mit dem übrigen Bereich des Kraftstoffbehälters besonders gering gehalten werden, führt diese Gestaltung zu einer besonders hohen Dichtheit des erfindungsgemäßen Kraftstoffbehälters.

Zur weiteren Erhöhung der Stabilität des erfindungsgemäßen Kraftstoffbehälters im Bereich des Deckels trägt es bei, wenn sich der Metalleinsatz unmittelbar an einem Schließring oder einem Haltering eines den Deckel gegen den Rand der Montageöffnung vorspannenden Bajonettverschlusses abstützt. Durch diese Gestaltung werden die Vorspannkräfte des Deckels unmittelbar in die Druckfläche eingeleitet. Der Metalleinsatz und der Schließring oder der Haltering können beispielsweise einstückig gestaltet sein.

Die Befestigung des Deckels kann anstelle eines Bajonettverschlusses auch anderweitig erfolgen, sofern der die Struktur der erfindungsgemäßen Dichtung erhalten bleibt. So ist es denkbar, den Deckel mittels Stehbolzen und Muttern oder mit einem im Querschnitt V-förmigen Ring am Kraftstoffbehälter zu befestigen, wobei der V-förmige Ring den Deckel und einen Flansch am Kraftstoffbehälter umgreift.

Die Anzahl der Dichtflächen wird gemäß einer anderen vorteilhaften Weiterbildung der Erfindung besonders gering gehalten, wenn der Metalleinsatz stoffschlüssig mit dem jeweils angrenzenden, aus Kunststoff gefertigten Bauteil verbunden ist. Diese stoffschlüssige Verbindung kann beispielsweise durch ein Umspritzen des Metalleinsatzes mit Kunststoff während der Fertigung des Deckels oder des Kraftstoffbehälters erfolgen.

Die Erfindung läßt zahlreiche Ausführungsformen zu. Zur weiteren Verdeutlichung ihres Grundprinzips sind drei davon in der Zeichnung dargestellt und werden nachfolgend beschrieben. Diese zeigt in
- Fig.1: eine Schnittdarstellung durch einen erfindungsgemäßen Kraftstoffbehälter im Bereich einer Montageöffnung,
- Fig.2: eine Schnittdarstellung durch eine weitere Ausführungsform des erfindungsgemäßen Kraftstoffbehälters im Bereich einer Montageöffnung,
- Fig.2a: einen Querschnitt durch eine Dichtung aus den Figuren 1 und 2,
- Fig.3: eine Schnittdarstellung durch eine weitere Ausführungsform des erfindungsgemäßen Kraftstoffbehälters im Bereich einer Montageöffnung,
- Fig. 4: eine stark vergrößerte Darstellung des mit IV gekennzeichneten Teilbereichs des Kraftstoffbehälters aus Figur 3,

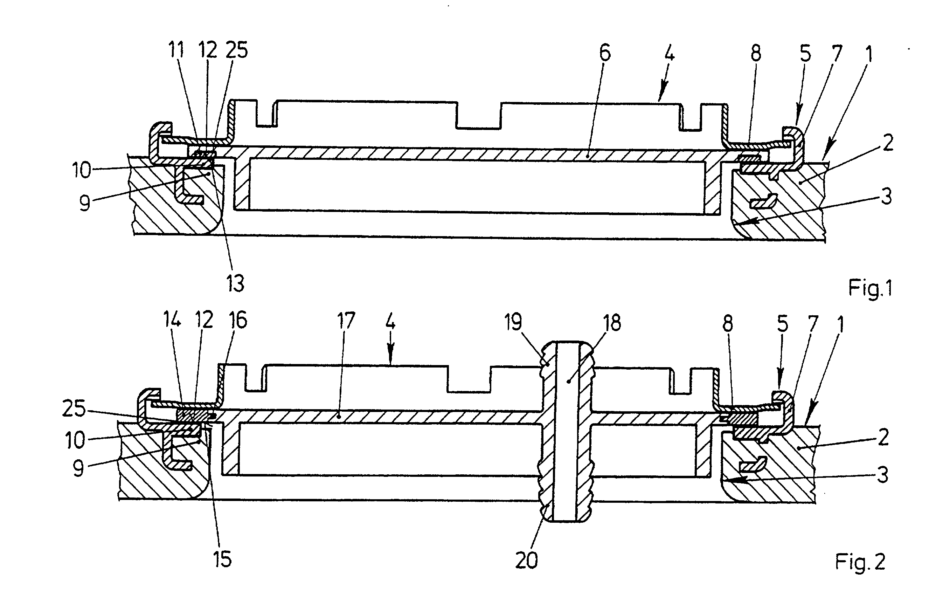

Figur 1 zeigt einen Kraftstoffbehälter 1 mit einer in einer Wandung 2 angeordneten Montageöffnung 3. Die Montageöffnung 3 ist von einem Deckel 4 verschlossen. Zur Verbindung haben der Deckel 4 und die Wandung 2 des Kraftstoffbehälters 1 einen Bajonettverschluß 5. Der Kraftstoffbehälter 1 ist aus Kunststoff im Spritzgußverfahren oder im Blasverfahren gefertigt. Der Deckel 4 hat in seinem mittleren Bereich ein Kunststoffteil 6. Bei dem Dekkel 4 kann es sich beispielsweise um einen Verschlußflansch für eine nicht dargestellte, in dem Kraftstoffbehälter 1 einzusetzende Förderpumpe handeln. Der Deckel 4 dichtet die Montageöffnung 3 nach dem Einsetzen der Förderpumpe ab. Der Bajonettverschluß 5 hat einen in der Wandung 2 des Kraftstoffbehälters 1 im Bereich der Montageöffnung 3 befestigten Haltering 7. Der Haltering 7 wirkt mit einem den Deckel 4 hintergreifenden Schließring 8 zusammen. Hierdurch wird der Deckel 4 gegen einen Rand 9 der Montageöffnung 3 mit einer vorgesehenen Kraft vorgespannt. Der Bajonettverschluß 5 ist in der EP 0 838 360 A1, auf die hier vollinhaltlich Bezug genommen wird, beschrieben.

Der Deckel 4 weist einen ringförmigen Metalleinsatz 11 auf. Der Haltering 7 hat einen Bereich 10, der sich im Bereich des die Montageöffnung 3 begrenzenden Randes 9 erstreckt. Der Metalleinsatz 11 ist stoffschlüssig mit dem Kunststoffteil 6 des Deckels 4 verbunden. Die Bereiche 10, 11 weisen jeweils eine auf das gegenüberliegende Bauteil weisende Druckfläche 12, 13 auf. Die Druckflächen 12, 13 sind zur Abdichtung der Montageöffnung 3 gegeneinander vorgespannt. Zwischen den Druckflächen ist eine Dichtung 25 angeordnet. Bei aus Stahlblech gefertigen Kraftstoffbehältern kann der Bereich 10 meist entfallen, da die erforderliche Stabilität des Randes 9 der Montageöffnung 3 hierbei durch eine entsprechende Formgebung erzeugt werden kann.

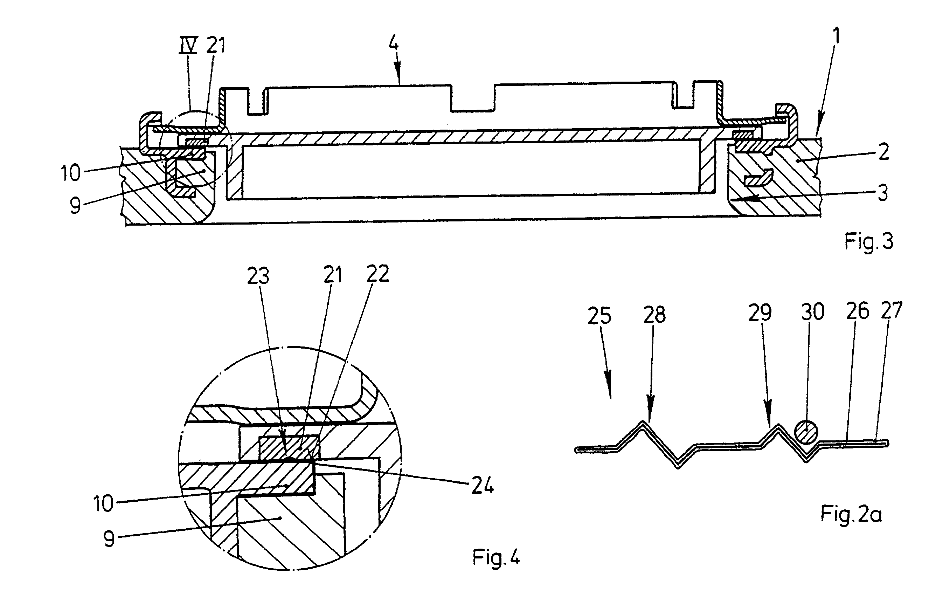

Figur 2 zeigt eine weitere Ausführungsform des Kraftstoffbehälters 1. Dieser unterscheidet sich von dem aus Figur 1 vor allem dadurch, daß sich ein Metalleinsatz 14 des Deckels 4 unmittelbar an dem Schließring 8 abstützt. Auf der dem Schließring 8 gegenüberliegenden Seite hat der Metalleinsatz 14 eine in Richtung der Druckfläche 12 des Bereiches 10 des Halterings 7 an der Montageöffnung 3 vorgespannte Druckfläche 15. Wie bei der Ausführungsform nach Figur 1 ist zwischen den Druckflächen 12, 15 eine Dichtung 25 angeordnet. Von dem Metalleinsatz 14 des Dekkels 4 ragt ein schmaler Rand 16 radial nach innen. Dieser Rand 16 ist stoffschlüssig mit einem im mittleren Bereich des Deckels 4 angeordneten Kunststoffteil 17 verbunden. Aus dem Kraftstoffbehälter 1 herauszuführende Leitungen 18 sind durch das Kunststoffteil 17 geführt. Das Kunststoffteil 17 hat hierfür mehrere Anschlußstutzen 19, 20, von denen zur Vereinfachung der Zeichnung nur die für eine einzige Leitung 18 dargestellt sind. Selbstverständlich kann sich der Metalleinsatz 10 des Randes 9 der Montageöffnung 3 zur weiteren Erhöhung der Stabilität an dem Haltering 7 abstützen.

Figur 2a zeigt eine Schnittdarstellung die Dichtung 25 aus den Figuren 1 und 2. Die Dichtung 25 hat einen blechartigen, mit einer gummielastischen Ummantelung 26 versehenen Träger 27. Der Träger 27 hat Sicken 28, 29, mit denen er an den in den Figuren 1 und 2 dargestellten Druckflächen 12, 13, 15 der Metalleinsätze 10, 11, 14 vorgespannt ist. Weiterhin ist in einer der Sicken 28, 29 ein O-Ring 30 angeordnet, der sich im montierten Zustand an den Druckflächen 12, 13, 15 abstützt.

Figur 3 zeigt eine weitere Ausführungsform des Kraftstoffbehälters 1. In Figur 4 ist stark vergrößert der mit IV gekennzeichnete Bereich des Kraftstoffbehälters 1 aus Figur 3 dargestellt. Diese Ausführungsform des Kraftstoffbehälters 1 unterscheidet sich von der aus Figur 1 vor allem dadurch, daß ein Metalleinsatz 21 des Deckels 4 eine in einer Druckfläche 22 angeordnete Kerbe 23 aufweist. In der Kerbe 23 ist ein Dichtring 24 angeordnet, welcher gegen den Metalleinsatz 10 des Randes 9 der Montageöffnung 3 vorgespannt ist. Der Dichtring 24 hat im Verhältnis zu der Druckfläche 22 des Metalleinsatzes 21 sehr kleine Abmessungen und ist aus gummielastischen Kunststoff wie beispielsweise NBR, HNBR oder FPM gefertigt. Zum Erreichen der geringen Schichtdicke des Dichtringes 24 ist dieser in die Kerbe 23 eingespritzt.

## Patentansprüche

1. Kraftstoffbehälter für ein Kraftfahrzeug mit einer Montageöffnung, mit einem die Montageöffnung verschließenden, gegen den Rand der Montageöffnung vorgespannten Deckel und mit einer zwischen dem Rand der Montageöffnung und dem Deckel angeordneten Dichtung, **dadurch gekennzeichnet, daß** der Rand (9) der Montageöffnung (3) und der gegen den Rand (9) der Montageöffnung (3) vorgespannten Bereich des Deckels (4) eine auf das gegenüberliegende Bauteil weisende Druckfläche (12, 13, 15, 22) mit einer höheren Festigkeit aufweisen, und daß zwischen der Druckfläche (12, 13, 15, 22) eine dünne Schicht des Dichtmaterials (24, 26, 30) angeordnet ist.

2. Kraftstoffbehälter nach Anspruch 1, **dadurch gekennzeichnet, daß** die Druckfläche (12, 13, 15, 22) auf einem Metalleinsatz (10, 11, 14, 21) angeordnet ist.

3. Kraftstoffbehälter nach Anspruch 1 oder 2, **dadurch gekennzeichnet, daß** die zwischen dem Deckel (4) und dem Rand (9) der Montageöffnung (3) angeordnete Dichtung (25) einen Träger (27), vorzugsweise aus Metall, insbesondere aus Stahl oder Kupfer, besitzt, der mit dem Dichtmaterial (26) überzogen ist.

4. Kraftstoffbehälter nach zumindest einem der vorhergehenden Ansprüche, **dadurch gekennzeichnet, daß** der Träger (27) der Dichtung (25) zumindest eine Sicke (28, 29) hat.

5. Kraftstoffbehälter nach zumindest einem der vorhergehenden Ansprüche, **dadurch gekennzeichnet, daß** das Dichtmaterial (24, 26, 30) NBR, HNBR oder FPM ist.

6. Kraftstoffbehälter nach zumindest einem der vorhergehenden Ansprüche, **dadurch gekennzeichnet, daß** das Dichtmaterial (24, 26, 30) eine Schichtdicke von 1 µm - 2mm, vorzugsweise von 5 µm bis 500 µm besitzt.

7. Kraftstoffbehälter nach zumindest einem der vorhergehenden Ansprüche, **dadurch gekennzeichnet, daß** in der Sikke (28, 29) ein O-Ring (30) angeordnet ist.

8. Kraftstoffbehälter nach zumindest einem der vorhergehenden Ansprüche, **dadurch gekennzeichnet, daß** der in dem Deckel (4) angeordnete Metalleinsatz (11, 14, 21) ringförmig gestaltet ist und ein mittleres Kunststoffteil (6, 17) umschließt.

9. Kraftstoffbehälter nach zumindest einem der vorhergehenden Ansprüche, **dadurch gekennzeichnet, daß** aus den Kraftstoffbehältern (1) herauszuführende Leitungen (18) durch den mittleren, von dem Metalleinsatz (11, 14, 21) umschlossenen Kunststoffteil (6, 17) des Deckels (4) geführt sind.

10. Kraftstoffbehälter nach zumindest einem der vorhergehenden Ansprüche, **dadurch gekennzeichnet, daß** die Druckfläche (22) eine umlaufende Kerbe (23) aufweist, und daß in der Kerbe (23) ein Dichtmaterial angeordnet, vorzugsweise aufgespritzt, ist.

11. Kraftstoffbehälter nach zumindest einem der vorhergehenden Ansprüche, **dadurch gekennzeichnet, daß** der Metalleinsatz (10, 11, 14, 21) aus Stahl gefertigt ist.

12. Kraftstoffbehälter nach zumindest einem der vorhergehenden Ansprüche, **dadurch gekennzeichnet, daß** sich der Metalleinsatz (14) unmittelbar an einem Schließring (8) oder einem Haltering (7) eines den Deckel (4) gegen den Rand (9) der Montageöffnung (3) vorspannenden Bajonettverschlusses (5) abstützt.

13. Kraftstoffbehälter nach zumindest einem der vorhergehenden Ansprüche, **dadurch gekennzeichnet, daß** der Metalleinsatz (10, 11, 14, 21) stoffschlüssig mit dem jeweils angrenzenden, aus Kunststoff gefertigten Bauteil verbunden ist.
